Europäisches Patentamt

European Patent Office

Office européen des brevets

(19)

(11) Numéro de publication: **0 040 120**
**B1**

(12) **FASCICULE DE BREVET EUROPEEN**

(45) Date de publication du fascicule du brevet:
**23.11.83**

(21) Numéro de dépôt: **81400627.6**

(22) Date de dépôt: **21.04.81**

(51) Int. Cl.³: **F 16 G 13/06,** B 21 L 9/04

(54) **Plaque pour chaîne de transmission du type à douilles ou à rouleaux et son procédé de fabrication.**

(30) Priorité: **09.05.80 FR 8010415**

(43) Date de publication de la demande:
**18.11.81 Bulletin 81/46**

(45) Mention de la délivrance du brevet:
**23.11.83 Bulletin 83/47**

(84) Etats contractants désignés:
**DE GB IT**

(56) Documents cités:
**FR - A - 2 393 201**
**FR - A - 2 422 077**

(73) Titulaire: **COMPAGNIE DES TRANSMISSIONS MECANIQUES SEDIS Société dite:, 102 Rue Danton, F-92306 Levallois Perret (FR)**

(72) Inventeur: **Besse, Jean-Claude, 6 Rue de Paris, F-78520 Limay (FR)**

(74) Mandataire: **Polus, Camille et al, c/o Cabinet Lavoix 2, Place d'Estienne d'Orves, F-75441 Paris Cedex 09 (FR)**

**Plaque pour chaîne de transmission du type à douilles ou à rouleaux et son procédé de fabrication**

La présente invention concerne une plaque pour chaîne de transmission, notamment de véhicule du type bicyclette, vélomoteur ou analogue, ainsi qu'un procédé de fabrication d'une telle plaque.

Les chaînes de transmission, notamment pour bicyclettes ou analogues, actuellement connues, du type à douilles ou à rouleaux, sont en général constituées alternativement par des maillons extérieurs et des maillons intérieurs. Les maillons extérieurs sont constitués de deux plaques d'acier convenablement découpées et appelées plaques extérieures. Ces deux plaques extérieures sont réunies entre elles par deux axes cylindriques, pleins ou creux, emmanchés avec serrage et rivés sur les deux plaques. Les maillons intérieurs sont également constitués par deux plaques en acier découpées, traitées ou non, appelées plaques intérieures. Ces plaques intérieures sont emprisonnées entre les plaques extérieures et solidaires d'éléments tubulaires à travers lesquels passent les axes du maillon extérieur, assurant ainsi la liaison entre les maillons successifs. Dans le cas des chaînes à rouleaux, ces derniers sont disposés sur les éléments tubulaires qui constituent les douilles.

Le poids des plaques entre pour une part non négligeable, près de la moitié, dans le poids total de la chaîne. Or, pour économiser au maximum l'énergie humaine ou mécanique nécessaire à la propulsion du véhicule, on est amené à réduire le plus possible le poids de celui-ci, et par conséquent celui de la chaîne. Comme par ailleurs les aciers dont sont constituées ces plaques sont relativement onéreux, il est indispensable de réduire leurs dimensions au minimum. Cela conduit à réaliser des plaques comprenant deux plages planes d'extrémité percées de trous pour le passage des axes des maillons extérieurs et réunies entre elles par une partie centrale qui, n'étant pas percée de trous, est plus étroite à résistance égale. Une forme de plaque classique de ce type est le profil dit taille de guêpe, dans lequel les plages planes d'extrémité ont une forme circulaire et les bords longitudinaux délimitant la partie centrale ont une forme concave qui se raccorde au contour circulaire des plages d'extrémité.

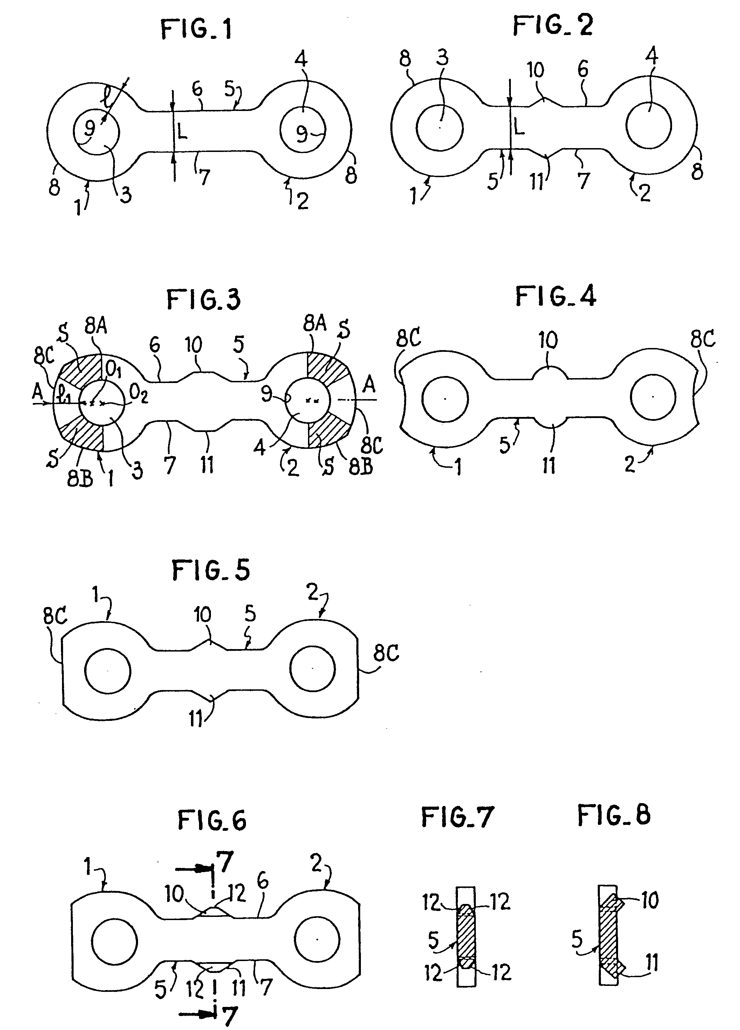

Si l'on pousse à leurs extrêmes les considérations d'allégement et de diminution des dimensions des plaques, on aboutit au profil de la fig. 1 des dessins annexés, dans lequel les plages d'extrémité circulaires sont réunies par une partie centrale et rectiligne et où les plages d'extrémité et la partie centrale ont les sections minimales permettant de répondre aux normes de résistance imposées. Toutefois, l'expérience a montré qu'un tel profil de plaque ne permettait pas d'assurer la tenue voulue de la chaîne sur la denture des pignons avec lesquels elle engrène.

L'invention vise donc à réaliser une plaque pour maillons de chaîne de transmission qui présente un poids et des dimensions minimaux tout en assurant une bonne tenue de la chaîne constituée de tels maillons sur la denture des pignons avec lesquels cette chaîne engrène.

A cet effet, l'invention a pour objet une plaque pour chaîne de transmission de véhicule du type bicyclette ou analogue, comprenant deux plages planes d'extrémité réunies entre elles par une partie centrale plus étroite délimitée par deux bords longitudinaux, caractérisée en ce que les bords de la partie centrale délimitent, sensiblement au milieu de leur longueur, une partie en saillie vers l'extérieur en forme de dent. Des modes de réalisation préférés sont décrits dans les revendications dépendantes.

D'autres caractéristiques et avantages de l'invention ressortiront de la description qui va suivre, faite en se référant aux dessins annexés donnés uniquement à titre d'exemple et sur lesquels:

la fig. 1 est une vue en plan de la plaque que l'on obtient en réduisant au minimum les dimensions d'une plaque classique de l'art antérieur;

la fig. 2 est une vue en plan d'une plaque pour maillons suivant un premier mode de réalisation de l'invention;

la fig. 3 est une vue en plan d'une plaque pour maillons suivant un second mode de réalisation de l'invention;

la fig. 4 est une vue en plan d'une plaque pour maillons suivant un troisième mode de réalisation de l'invention;

la fig. 5 est une vue en plan d'une plaque pour maillons suivant un quatrième mode de réalisation de l'invention;

la fig. 6 est une vue en plan d'une plaque pour maillons suivant un cinquième mode de réalisation de l'invention;

la fig. 7 est une vue en coupe suivant la ligne 7-7 de la fig. 6;

la fig. 8 est une vue supposée prise suivant la ligne 7-7 de la fig. 6, mais illustrant une variante d'exécution des dents prévues sur la partie centrale de la plaque;

la fig. 9 est une vue en plan d'une plaque pour maillons suivant un mode préféré de réalisation de l'invention, et

la fig. 10 est une vue en plan illustrant le procédé de fabrication de la plaque de la fig. 9.

En se reportant tout d'abord à la fig. 1, la plaque pour maillons représentée comprend deux plages planes d'extrémité 1 et 2 de forme circulaire comportant des trous 3 et 4 prévus pour le passage ou la fixation d'axes (non représentés), suivant que cette plaque est destinée à la réalisation de maillons intérieurs ou extérieurs d'une chaîne de transmission. Les deux plages planes d'extrémité 1 et 2 sont réunies entre elles par une partie centrale 5 délimitée par des bords longitudinaux rectilignes 6 et 7 et dont la largeur L présente la valeur minimale nécessaire pour assurer la résistance voulue de la plaque en fonction de conditions d'utilisation données ou de normes imposées. De même, la largeur radiale l de la couronne délimitée entre le contour extérieur 8 et le contour intérieur 9 des plages d'extrémité 1 et 2 présente la valeur minimale requise pour répondre à des conditions de résistance données. Comme indiqué précédemment, une telle plaque, dont les dimensions ont été optimisées, n'assure pas la tenue voulue d'une chaîne constituée de telles plaques sur la denture des pignons avec lesquels cette chaîne engrène.

Le premier mode de réalisation de l'invention représenté à la fig. 2 permet de résoudre ce problème au moyen d'une plaque qui est en tout point identique à celle de la fig. 1, à ceci près que les bords longitudinaux 6 et 7 de sa partie centrale 5 délimitent, au milieu de la longueur de cette partie 5, des parties en saillie vers l'extérieur en forme de dent 10 et 11 respectivement. Dans cette première forme de réalisation, les dents 10 et 11 présentent la forme de triangles isocèles ayant une médiatrice commune constituant un axe de symétrie médian transversal pour la plaque. De façon surprenante, il a été constaté qu'une chaîne de transmission constituée à partir de plaques comportant ces dents 10 et 11 présente une tenue sur la denture des pignons bien supérieure à celle d'une chaîne réalisée à partir de plaques conformes à l'exemple de la fig. 1. En outre, la présence de ces dents a pour effet de renforcer la partie centrale dans sa zone médiane la plus sollicitée, ce qui permet d'optimiser la largeur L de la partie centrale 5 dans ses zones latérales disposées de part et d'autre des dents 10 et 11, en la réduisant au minimum nécessaire pour répondre aux sollicitations de traction et de flexion.

On se reportera maintenant à la fig. 3 qui montre un second mode de réalisation d'une plaque suivant l'invention dans lequel les dents 10 et 11 ont une forme trapézoïdale au lieu d'une forme triangulaire. En outre, dans ce mode de réalisation, les centres des contours circulaires extérieurs 8 des plages d'extrémité 1 et 2 sont décalés vers l'extérieur suivant l'axe longitudinal AA de la plaque par rapport aux centres $O_2$ des trous 3 et 4 respectivement. De plus, les contours circulaires 8 ne sont pas continus d'un bord longitudinal 6 à l'autre bord longitudinal 7, mais comprennent deux arcs de cercle 8A et 8B disposés symétriquement de part et d'autre de l'axe AA et réunis par un bord d'extrémité convexe 8C. Dans ce mode de réalisation, le découpage de la plaque est tel que la largeur $l_1$ des plages d'extrémité 1 et 2 entre le bord d'extrémité 8C et le contour intérieur 9 des trous 3 et 4 suivant l'axe AA est réduit à son strict minimum, de manière à faire face aux efforts qui, en service, s'exercent dans cette zone, tandis que la largeur de la couronne délimitée entre les arcs de cercle 8A et le contour intérieur 9 est supérieure à $l_1$ dans les zones S des plages d'extrémité 1 (identifiées par des hachures sur les dessins) dans lesquelles les efforts en service sont les plus importants; cet agencement permet donc de réduire la dépense en matière pour la fabrication des plaques sans en réduire la résistance.

L'exemple de réalisation de la fig. 4 est analogue à celui de la fig. 3 et diffère de celui-ci simplement en ce que les dents 10 et 11 ont une forme arrondie et en ce que les bords d'extrémité 8C ont une forme concave et non plus convexe.

Enfin, la fig. 5 montre une plaque analogue à celles des fig. 3 et 4 dans laquelle les dents 10 et 11 ont une forme triangulaire et les bords d'extrémité 8C sont rectilignes, ce qui permet de découper dans un flan de métal des plaques de ce type sans chute de métal entre deux plaques adjacentes bout à bout.

La fig. 6 montre une plaque qui diffère de la fig. 5 uniquement en ce que les dents 10 et 11 sont biseautées de façon à présenter des faces latérales 12 qui sont inclinées par rapport aux faces latérales de la partie centrale 5, de manière à faciliter l'engrènement d'une chaîne constituée de telles plaques sur les pignons avec lesquels elle engrène.

La fig. 8 est une coupe analogue à la fig. 7 montrant une variante de réalisation dans laquelle les dents 10 et 11 ont été déportées par pliage d'un côté par rapport au plan d'ensemble de la plaque. De préférence, une telle plaque doit être utilisée comme plaque intérieure de maillon intérieur avec les dents 10 et 11 tournées vers l'extérieur du maillon, de telle sorte que la partie centrale 5 présente localement une forme évasée vers l'extérieur qui constitue une entrée vis-à-vis des pignons facilitant l'engrènement de la chaîne sur ces pignons comme décrit dans la demande de brevet français N° 77.20793.

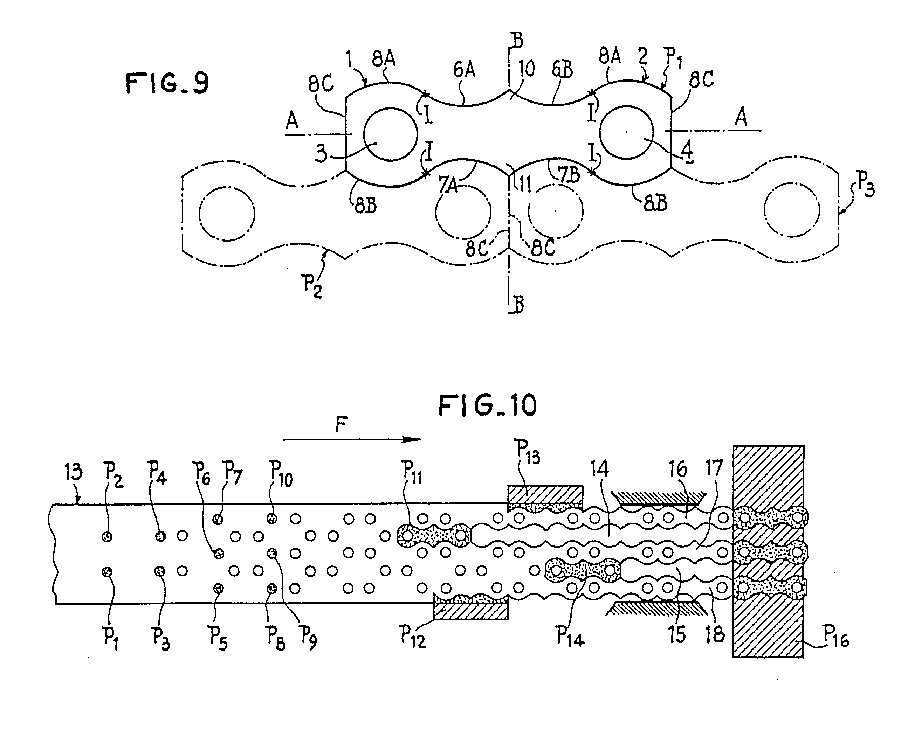

La fig. 9 illustre un mode préféré de réalisation de l'invention semblable à celui de la fig. 5, mais dans lequel les bords longitudinaux 6 et 7 de la partie centrale sont constitués chacun par deux tronçons de courbe qui prolongent de façon continue la partie circulaire 8A, 8B du contour extérieur 8 des plages d'extrémité 1 et 2 et se raccordent à la pointe des dents 10 et 11, qui peut être arrondie. Plus particulièrement, chacun de ces tronçons de courbe 6A, 6B et 7A, 7B est constitué par un arc de cercle de même rayon que les arcs de cercle 8A, 8B et qui se raccorde à celui-ci au niveau d'un point d'inflexion I situé à mi-distance du bord d'extrémité adjacent 8C et de l'axe transversal médian de symétrie BB de la plaque. Il existe donc un point d'inflexion I qui constitue un centre de symétrie pour chacun des éléments de courbe 6A, 8A; 6B, 8A; 7A, 8B; 7B, 8B, respectivement. En d'autres termes, la partie du contour latéral d'une plaque s'étendant entre son bord d'extrémité 8C et l'axe BB est le complément exact de la partie correspondante d'une plaque identique juxtaposée à la plaque précitée, avec un décalage dans le sens longitudinal égal à une demi-longueur de plaque. Ainsi, comme le montre la fig. 9, la partie du contour latéral de la plaque P1 comprise entre ses deux bords d'extrémité 8C est exactement complémentaire de la partie adjacente du contour de deux plaques P2 et P3 juxtaposées à la plaque P1, avec un décalage égal à une demi-longueur de plaque, c'est-à-dire avec leurs rebords d'extrémité adjacents 8C disposés suivant l'axe de symétrie transversal médian BB. De même, on comprend qu'une plaque identique aux plaques P1, P2 et P3, disposée exactement dans l'alignement de la plaque P1, aura un profil qui sera le complément exact de celui des plaques P2 et P3, et ainsi de suite. Cela permet donc de réaliser des plaques identiques dans une bande de métal sans aucune chute entre les plaques adjacentes, les seuls chutes étant constituées par les découpes pratiquées sur les rives de la bande.

La fig. 10 illustre schématiquement le procédé de découpage qui permet de réaliser des plaques du type de la fig. 9 sans aucune chute entre les plaques. A cet effet, on fait défiler dans le sens de la flèche F une bande de métal 13 dans laquelle on poinçonne, à des emplacements prédéterminés, des trous qui correspondront ultérieurement aux trous 3 et 4 des plaques, au moyen de poinçons P1 à P10. En aval du poinçonnage des trous, on découpe une à une, au fur et à mesure de l'avancement de la bande, une première série de plaques au moyen d'un poinçon P11, les plaques successives étant contiguës par leurs bords d'extrémité 8C, de sorte qu'on ménage dans la bande 13 une fente 14 au fur et à mesure de l'avancement de celle-ci, les plaques découpées par le poinçon P11 étant recueillies sous la bande 13. En aval du poinçon P11, on découpe dans chaque rive de la bande, au moyen de poinçons P12 et P13 respectivement, des flans définissant le profil d'un côté de plaques qui seront ultérieurement découpées. En aval du poinçon P13 est disposé un poinçon P14 qui découpe, une à une, au fur et à mesure de l'avancement de la bande, une deuxième série de plaques, de la même manière que le fait le poinçon P11, en ménageant ainsi une deuxième fente longitudinale 15. Les plaques découpées par le poinçon P14 sont également recueillies sous la bande. La largeur de la bande et la distance entre les poinçons P12, P14, P11 et P13 perpendiculairement à la bande 13 sont telles qu'il subsiste, après les découpages par ces poinçons, trois éléments de bande 16, 17 et 18, constitués chacun d'une série de plaques du type de celles découpées par les poinçons P11 et P14 et solidaires bout à bout les unes des autres. L'opération finale consiste ensuite à découper ces trois éléments de bande 16, 17 et 18 simultanément au moyen d'un poinçon P16, ce qui fournit à chaque découpage trois plaques identiques à celles découpées par les poinçons P11 et P14. La forme de la plaque suivant le mode préféré de réalisation de l'invention et son procédé de découpage décrit ci-dessus permettent donc d'optimiser l'utilisation de la matière de la bande à partir de laquelle sont réalisées les plaques, du fait qu'il n'y a aucune chute de métal entre les plaques et que celles-ci ont des dimensions minimales grâce à la présence des dents 10 et 11 et des extrémités tronquées 8C. Naturellement, cela se traduit également par un gain de poids au niveau des chaînes fabriquées à partir de telles plaques.

Bien entendu, l'invention n'est pas limitée aux seuls modes de réalisation décrits ci-dessus et, en particulier, il doit être compris que l'on peut combiner des dents ayant des formes triangulaires, trapézoïdales, arrondies ou autres avec des plages d'extrémité 1 et 2 ayant l'une quelconque des formes décrites ci-dessus ou n'importe quelle autre forme appropriée. Plus généralement, on notera que la partie 8A, 8B du contour 8 des plages d'extrémité n'est pas nécessairement circulaire, mais peut être un tronçon de courbe quelconque approprié ou une ligne brisée. Il en va notamment ainsi pour le mode de réalisation préféré de l'invention, qui peut être caractérisé en ce que chaque plage d'extrémité 1, 2 de la plaque présente un bord d'extrémité 8C rectiligne et chaque tronçon du contour extérieur de la plaque compris entre une extrémité d'un bord d'extrémité et l'axe transversal médian de symétrie est symétrique par rapport à un point I disposé au milieu de la distance séparant ce bord d'extrémité 8C dudit axe transversal médian de symétrie B-B, de sorte que chaque tronçon du contour extérieur de ladite plaque est le complément exact de celui d'une autre plaque juxtaposée à ladite plaque, avec un décalage longitudinal égal à la moitié de la longueur de ladite plaque.

**Revendications**

1. Plaque pour chaîne de transmission du type à douilles ou à rouleaux dont l'entraînement s'effectue par ces derniers, comportant alternativement des maillons extérieurs constitués de plaques réunies entre elles par des axes et des maillons intérieurs également constitués de plaque solidaires d'éléments tubulaires dans lesquels passent lesdits axes, assurant ainsi la liaison entre des maillons successifs, lesdites plaques comprenant deux plages planes d'extrémité (1, 2) réunies entre elles par une partie centrale (5) plus étroite délimitée par deux bords (6, 7) longitudinaux, caractérisée en ce que chaque bord (6, 7) de la partie centrale (5) de chacune desdites plaques délimite, sensiblement au milieu de sa longueur, une partie en saillie vers l'extérieur en forme de dent (10, 11), chaque plaque ayant un axe de symétrie longitudinal.

2. Plaque selon la revendication 1, caractérisée en ce que ladite dent (10, 11) a un profil triangulaire.

3. Plaque selon la revendication 1, caractérisée en ce que ladite dent (10, 11) a un profil trapézoïdal.

4. Plaque selon la revendication 1, caractérisée en ce que ladite dent (10, 11) a un profil arrondi.

5. Plaque selon l'une des revendications 1 à 4, caractérisée en ce que le contour extérieur (8) desdites plages d'extrémité (1, 2) est délimité par deux arcs de cercle (8A, 8B) disposés symétriquement par rapport à un axe longitudinal (A-A) de la plaque et par un bord d'extrémité (8C) reliant lesdits arcs de cercle.

6. Plaque selon la revendication 5, caractérisée en ce que ledit bord d'extrémité (8C) est concave.

7. Plaque selon la revendication 5, caractérisée en ce que ledit bord d'extrémité (8C) est convexe.

8. Plaque selon la revendication 5, caractérisée en ce que ledit bord d'extrémité (8C) est rectiligne.

9. Plaque suivant la revendication 1, présentant un axe longitudinal médian de symétrie et un axe transversal médian de symétrie, caractérisée en ce que chaque plage d'extrémité (1, 2) de la plaque présente un bord d'extrémité (8C) rectiligne et en ce que chaque tronçon du contour extérieur de la plaque compris entre une extrémité d'un bord d'extrémité et l'axe transversal médian de symétrie est symétrique par rapport à un point (I) disposé au milieu de la distance séparant ce bord d'extrémité (8C) dudit axe transversal médian de symétrie (B-B), de sorte que chaque tronçon du contour extérieur de ladite plaque est le complément exact de celui d'une autre plaque juxtaposée à ladite plaque avec un décalage longitudinal égal à la moitié de la longueur de ladite plaque.

10. Plaque suivant la revendication 9, caractérisée en ce que chaque tronçon comprend un premier arc de courbe (8A, 8B) délimitant partiellement le contour extérieur d'une plage d'extrémité et un second arc de courbe (6A, 6B, 7A, 7B) de même rayon de courbure que le premier arc de courbe et prolongeant celui-ci à partir d'un point d'inflexion (I) constituant ledit centre de symétrie.

11. Plaque selon la revendication 10, caractérisée en ce que lesdits arcs de courbe (6A, 6B, 7A, 7B, 8A, 8B) sont des arcs de cercle.

12. Plaque selon l'une des revendications 5, 6, 7, 8 ou 11, comprenant un trou circulaire pour le passage ou la fixation d'un axe dans chacune des plages d'extrémité, caractérisée en ce que le centre ($O_1$) de chacun desdits arcs de cercle (8A, 8B) délimitant partiellement le contour extérieur desdites plages d'extrémité est décalé par rapport au centre ($O_2$) du trou correspondant.

13. Plaque selon la revendication 12, caractérisée en ce que le centre ($O_1$) de chaque arc de cercle est décalé axialement du côté de l'extrémité adjacente (8C) de la plaque par rapport au centre ($O_2$) du trou correspondant.

14. Plaque selon l'une des revendications 1 à 13, caractérisée en ce que les faces latérales (12) desdites dents (10, 11) sont biseautées.

15. Plaque selon l'une des revendications 1 à 13, caractérisée en ce que lesdites dents (10, 11) sont pliées de manière à être déportées obliquement d'un côté de la plaque.

16. Procédé de fabrication de plaques selon l'une des revendications 10 et 11 par découpage d'une bande de métal défilant longitudinalement, caractérisé en ce qu'on pratique dans les rives de la bande des découpes contiguës au moyen d'un premier et d'un second poinçon ($P_{12}$, $P_{13}$) pour conférer aux bords de la bande le profil latéral desdites plaques, on découpe dans la bande, une à une, au fur et à mesure de l'avancement de la bande, une première série de plaques contiguës au moyen d'un troisième poinçon ($P_{11}$), l'écartement entre ledit troisième poinçon ($P_{11}$) et lesdits premier et second poinçons ($P_{12}$, $P_{13}$) dans une direction perpendiculaire à la longueur de la bande étant tel qu'il subsiste, après le découpage de la première série de plaques, au moins un élément de bande continu (16, 17, 18) présentant la forme desdites plaques mises bout à bout, et on découpe ledit élément de bande (16, 17, 18) au moyen d'un quatrième poinçon ($P_{16}$) pour former une deuxième série de plaques.

17. Procédé suivant la revendication 16, caractérisé en ce qu'on découpe plusieurs séries de plaques dans la bande (13) en formant des fentes longitudinales (14, 15) délimitant entre elles et latéralement des éléments de bande (16, 17, 18) présentant la forme desdites plaques mises bout à bout, et on découpe ensuite lesdits éléments de bande au moyen dudit quatrième poinçon ($P_{16}$) pour former une autre série de plaques.

**Patentansprüche**

1. Lasche für eine Hülsen- oder Rollenkette eines Kettentriebs, wobei die Rollen oder Hülsen im Wechsel angeordnete äussere Kettenglieder aufweisen, die aus miteinander über Achsen verbundenen Laschen bestehen, sowie innere Kettenglieder, welche ebenfalls aus Laschen bestehen, die fest mit röhrenförmigen Elementen verbunden sind, durch die sich die Achsen erstrecken, wodurch eine Verbindung zwischen aufeinanderfolgenden Kettengliedern sichergestellt ist, und wobei die genannten Laschen zwei ebene Endbereiche (1, 2) aufweisen, welche durch einen schmaleren Mittelteil (5) miteinander verbunden sind, der durch in Längsrichtung verlaufende Kanten (6, 7) begrenzt ist, dadurch gekennzeichnet, dass jede Kante (6, 7) des Mittelteils (5) jeder Lasche auf der Hälfte ihrer Länge einen sich deutlich nach aussen in Form eines Zahnes (10, 11) erstreckenden Vorsprung aufweist, wobei jede Lasche eine Symmetrieachse in Längsrichtung besitzt.

2. Lasche nach Anspruch 1, dadurch gekennzeichnet, dass der Zahn (10, 11) ein dreieckiges Profil aufweist.

3. Lasche nach Anspruch 1, dadurch gekennzeichnet, dass der Zahn (10, 11) ein trapezförmiges Profil aufweist.

4. Lasche nach Anspruch 1, dadurch gekennzeichnet, dass der Zahn (10, 11) ein gerundetes Profil aufweist.

5. Lasche nach einem der Ansprüche 1 bis 4, dadurch gekennzeichnet, dass der äussere Rand (8) der Endbereiche (1, 2) durch zwei Kreisbögen (8A, 8B) gebildet ist, die in bezug auf eine Längsachse (A-A) der Lasche symmetrisch angeordnet sind, sowie durch eine Endkante (8C), die die beiden Kreisbögen miteinander verbindet.

6. Lasche nach Anspruch 5, dadurch gekennzeichnet, dass die Endkante (8C) konkav ist.

7. Lasche nach Anspruch 5, dadurch gekennzeichnet, dass die Endkante (8C) konvex ist.

8. Lasche nach Anspruch 5, dadurch gekennzeichnet, dass die Endkante (8C) geradlinig ist.

9. Lasche nach Anspruch 1, mit einer mittig in Längsrichtung verlaufenden Symmetrieachse und einer mittig in Querrichtung verlaufenden Symmetrieachse, dadurch gekennzeichnet, dass jeder Endbereich (1, 2) der Lasche eine geradlinige Endkante (8C) aufweist und dass jede Strecke des äusseren Laschenrandes zwischen einer äussersten Endkante und der mittig in Queerichtung verlaufenden Symmetrieachse (B-B) zu einem Punkt (I), der sich mittig zwischen dieser Endkante (8C) und der mittig in Querrichtung verlaufenden Symmetrieachse (B-B) befindet, symmetrisch ist, wobei jede Strecke des äusseren Laschenrandes eine genaue Ergänzung zu einer anderen Lasche bildet, welche neben dieser mit einer Versetzung in Längsrichtung um die Hälfte der Länge der genannten Lasche an angeordnet ist.

10. Lasche nach Anspruch 9, dadurch gekennzeichnet, dass die Strecke einen ersten Bogen (8A, 8B) aufweist, welcher zum Teil den äusseren Rand eines Endbereichs bildet, sowie einen zweiten Bogen (6A, 6B, 7A, 7B), der denselben Krümmungsradius wie der erste Bogen hat und von einem Wendepunkt (I) ab, welcher das Symmetriezentrum ist, eine Fortsetzung desselben bildet.

11. Lasche nach Anspruch 10, dadurch gekennzeichnet, dass die Bögen (6A, 6B, 7A, 7B, 8A, 8B) Kreisbögen sind.

12. Lasche nach einem der Ansprüche 5, 6, 7, 8 und 11, mit einer kreisförmigen Bohrung zum Hindurchführen oder Befestigen einer Achse in jedem der Endbereiche, dadurch gekennzeichnet, dass der Mittelpunkt ($O_1$) eines jeden der Kreisbögen (8A, 8B), die zum Teil den äusseren Rand der genannten Endbereiche bilden, in bezug auf den Mittelpunkt ($O_2$) der entsprechenden Bohrung versetzt ist.

13. Lasche nach Anspruch 12, dadurch gekennzeichnet, dass der Mittelpunkt ($O_1$) des Kreisbogens in bezug auf den Mittelpunkt ($O_2$) der entsprechenden Bohrung axial in Richtung des danebenliegenden Bereiches (8C) der Lasche versetzt ist.

14. Lasche nach einem der Ansprüche 1 bis 13, dadurch gekennzeichnet, dass die Flanken (12) der genannten Zähne (10, 11) abgeschrägt sind.

15. Lasche nach einem der Ansprüche 1 bis 13, dadurch gekennzeichnet, dass die Zähne (10, 11) umgebogen sind, um an einer Seite der Lasche in Schrägstellung mitgenommen zu werden.

16. Verfahren zur Herstellung von Laschen nach den Ansprüchen 10 und 11 durch Schneiden eines in Längsrichtung vorbeigeführten Metallbandes, dadurch gekennzeichnet, dass man aus den Seiten des Bandes mittels eines ersten und zweiten Schnittstempels ($P_{12}$, $P_{13}$) aneinandergrenzende Ausschnitte herausschneidet, um so die Bandkanten mit dem seitlichen Profil der Laschen zu versehen, dass dann aus dem vorbeilaufenden Band nacheinander mittels eines dritten Schnittstempels ($P_{11}$) eine erste Anzahl oder Reihe fortlaufender bzw. aneinandergrenzender Laschen herausgeschnitten wird, wobei der Abstand zwischen dem dritten Schnittstempel ($P_{11}$) und dem ersten und zweiten Schnittstempel ($P_{12}$, $P_{13}$) in einer Richtung senkrecht zur Bandlänge gesehen so bemessen ist, dass nach dem Schneiden einer ersten Reihe von Laschen mindestens ein Element (16, 17, 18) des kontinuierlichen Bandes zurückbleibt, welches die Form der aneinandergrenzenden Laschen aufweist, und dass danach das Bandelement (16, 17, 18) zur Herstellung einer zweiten Reihe von Laschen mit Hilfe eines vierten Schnittstempels ($P_{16}$) abgeschnitten wird.

17. Verfahren nach Anspruch 16, dadurch gekennzeichnet, dass man unter Bildung von Aussparungen (14, 15) in Längsrichtung, welche zwischen sich sowie seitlich Bandelemente (16, 17, 18) bilden, die die Form der aneinandergrenzenden Laschen aufweisen, mehrere Laschenreihen in das Band (13) schneidet und diese Bandelemente dann zur Bildung einer weiteren Laschenreihe mit Hilfe des genannten vierten Schnittstempels (16) abschneidet.

## Claims

1. A plate for a transmission chain of the type having sleeves or rollers which is driven by the latter, comprising alternately outer links formed by plates interconnected by pins and inner links also formed by plates rigid with tubular elements through which extend said pins so as to form the connection between successive links, said plate comprising two planar end portions (1, 2) interconnected by a narrower centre portion (5) which is defined by two longitudinal edges (6, 7), wherein each edge (6, 7) of the centre portion (5) of each of said plates defines, substantially in the middle of its length, a portion which projects outwardly and has the shape of a tooth (10, 11), each plate having a longitudinal axis of symmetry.

2. A plate according to claim 1, wherein said tooth (10, 11) has a triangular profile.

3. A plate according to claim 1, wherein said tooth (10, 11) has a trapezoidal profile.

4. A plate according to claim 1, wherein said tooth (10, 11) has a rounded profile.

5. A plate according to any one of the claims 1 to 4, wherein the outer contour (8) of said end portions (1, 2) is defined by two arcs of a circle (8A, 8B) which are disposed symmetrically relative to the longitudinal axis (A-A) of the plate and by an end edge (8C) interconnecting said arcs of a circle.

6. A plate according to claim 5, wherein said end edge (8C) is concave.

7. A plate according to claim 5, wherein said end edge (8C) is convex.

8. A plate according to claim 5, wherein said end edge (8C) is rectilinear.

9. A plate according to claim 1, having a longitudinal median axis of symmetry and a transverse median axis of symmetry wherein each end portion (1, 2) of the plate has a rectilinear end edge (8C) and each section of the outer contour of the plate between one end of said end edge and the transverse median axis of symmetry is symmetrical relative to a point (I) disposed in the middle of the distance between said end edge (8C) and said transverse median axis of symmetry so that each said section of the outer contour of said plate is the exact complement of that of another plate juxtaposed to said plate with a longitudinal offset equal to one half of the length of said plate.

10. A plate according to claim 9, wherein said each section comprises a first arc (8A, 8B) of a curve partly defining the outer contour of an end portion and a second arc (6A, 6B, 7A, 7B) of a curve of the same radius of curvature as said first arc of a curve and extending the latter from a point of inflection (I) constituting said centre of symmetry.

11. A plate according to claim 10, wherein said arcs of a curve (6A, 6B, 7A, 7B) are arcs of a circle.

12. A plate according to any one of the claims 5, 6, 7, 8 and 11, comprising a circular aperture for the passage of, or the fixing of, a pin in each of the end portions, wherein the centre ($O_1$) of each of said arcs of a circle (8A, 8B) partly defining the outer contour of said end portions is offset relative to the centre ($O_2$) of the corresponding aperture.

13. A plate according to claim 12, wherein the centre ($O_1$) of each said arc of a circle is axially offset toward the adjacent end (8C) of the plate relative to the centre ($O_2$) of the corresponding aperture.

14. A plate according to any one of the claims 1 to 13, wherein the lateral faces (12) of said teeth (10, 11) are bevelled.

15. A plate according to any one of the claims 1 to 13, wherein said teeth (10, 11) are folded in such manner as to be obliquely offset to one side of the plate.

16. A method for manufacturing plates according to claim 10 or 11 by blanking out the plates from a band of metal fed longitudinally, comprising blanking out in the edges of the band contiguous portions by means of a first punch (12) and a second punch (13) so as to impart to the edges of the band the lateral profile of said plates, blanking out from the band, one by one and as the band is fed forward, a first series of contiguous plates by means of a third punch ($P_{11}$), the distance between said third punch ($P_{11}$) and said first and second punches (12, 13) in a direction perpendicular to the length of the band being such that there remains, after the blanking out of the first series of plates, at least one continuous band element (16, 17, 18) having the shape of said plates in end-to-end relation, and cropping said band element (16, 17, 18) by means of a fourth punch ($P_{16}$) so as to form a second series of plates.

17. A method according to claim 16, comprising blanking out a plurality of series of plates from the band (13), thereby forming longitudinal slots (14, 15) which laterally define therebetween band elements (16, 17, 18) having the shape of said plates in end-to-end relation, and thereafter cropping said band elements by means of said fourth punch ($P_{16}$) so as to form other series of plates.

FIG.1

FIG.2

FIG.3

FIG.4

FIG.5

FIG.6

FIG.7

FIG.8

FIG. 9

FIG. 10